# EUROPEAN PATENT APPLICATION

(11) **EP 1 973 195 A1**
(43) Date of publication of application: **24.09.2008**
(21) Application number: 06842971.1
(22) Date of filing: 21.12.2006
(51) Int. Cl.: H01Q 3/24

(54) **MOBILE TERMINAL DEVICE, ANTENNA SWITCHING METHOD, AND PROGRAM**

(30) Priority: 12.01.2006 JP 2006004709
(71) Applicant: NEC Corporation, Minato-ku Tokyo 108-8001 (JP)
(72) Inventor: IMURA, Yoshiki, Tokyo 108-8001 (JP)
(74) Representative: Glawe, Delfs, Moll
(86) International application number: PCT/JP2006/325463
(87) International publication number: WO 2007/080760

(57) **Abstract**

The present invention provides a mobile terminal device, an antenna switching method, and a program capable of realizing appropriate antenna switching compared to the conventional technique by coping with various use states in the antenna switching of a mobile phone including a plurality of antennas. A mobile terminal device including a plurality of antennas and performing antenna switching includes: a device state detection unit for detecting a device state of the mobile terminal device; an accessory connection detection unit for detecting an accessory connected to the mobile terminal device; a communication state detection unit for detecting a communication state of the mobile terminal device; and an antenna switching unit for selecting an appropriate antenna from the plurality of antennas and switching to it based on respective detection results detected by the device state detection unit, the accessory connection detection unit and the communication state detection unit.

## Description

### Technical field

The present invention relates to a mobile terminal device, an antenna switching method, and a program for performing appropriate antenna switching depending on a state of the device and a state of communication.

### Background art

Antennas used for conventional mobile phones tend to deteriorate their characteristics near a human body and are known to vary significantly according to using scenes of users such as a state of being held in a hand and a state of being left. Thus, in the case where a mobile phone has one antenna for transmitting/receiving radio signals, it is difficult to ensure quality in all states in accordance with downsizing mobile phones. Also, in the case where a mobile phone has a plurality of antennas for ensuring a corresponding frequency and antenna characteristics of the mobile phone, influence near a human body cannot be avoided in accordance with downsizing mobile phones, so that a complicated control sequence is required such as selecting an antenna with good channel quality depending on strength of received power and switching to the antenna.

As an example of the related art related to antenna switching of a mobile phone, "RADIO DEVICE AND ANTENNA SWITCHING METHOD FOR THE SAME" is available in which, in a folding type radio device with a plurality of antennas, performing antenna switching depending on a communication state and a folded state (open/closed state) can prevent performance deterioration when switching antennas (for example, see Patent document 1).
Also, as another example of the related art, "ANTENNA DEVICE" is available in which antenna selection and switching are performed depending on a folded state (open/closed state) in an antenna device with a plurality of antennas used for a mobile radio device (for example, see Patent document 2).
Patent document 1: Japanese Patent Laid Open Publication No. 2002-190752
Patent document 2: Japanese Patent Laid Open Publication No. 2003-133991

### Problems to be solved by the invention

The inventions according to the patent documents 1 and 2 only discriminate between a communication state and a standby state or between an open state and a closed state (folded state) of a device in antenna switching. However, it is difficult to switch antennas appropriately by considering only a communication state and a folded state as objects for discrimination, since current mobile phones include various functions and a plurality of the functions may be used simultaneously, so that use states of mobile phones are diversified. Accordingly, conventional antenna switching methods of mobile phones such as methods in the patent documents 1 and 2 cannot cope with various use states of current mobile phones.

Thus, in antenna switching of a mobile phone, it is necessary to build a high efficiency control system that can ensure quality by diversifying conditions for antenna selection and corresponding to various use states of a mobile phone.

The present invention has been made in view of the circumstances and, in a mobile phone with a plurality of antennas, it is an exemplary object to simplify a complicated antenna switching control sequence and solve a problem of significant antenna characteristic variation according to using scenes of users by selecting an antenna for use depending on various use states such as an open/closed state of a device, the presence or absence of an accessory connection, and a radio communication state (respective call types including a standby state), and switching to an appropriate antenna.

### Disclosure of the invention

In order to achieve the exemplary object, the present invention according to claim 1 is a mobile terminal device including a plurality of antennas and performing antenna switching, characterized by detecting a plurality of states of the mobile terminal device, and selecting an appropriate antenna from the plurality of antennas and switching to it based on the plurality of detection results.

The present invention according to claim 2 is a mobile terminal device including a plurality of antennas and performing antenna switching, characterized in that the device includes: a device state detection unit for detecting a device state of the mobile terminal device; an accessory connection detection unit for detecting an accessory connected to the mobile terminal device; a communication state detection unit for detecting a communication state of the mobile terminal device; and an antenna switching unit for selecting an appropriate antenna from the plurality of antennas and switching to it based on respective detection results detected by the device state detection unit, the accessory connection detection unit and the communication state detection unit.

The present invention according to claim 3 is the invention according to claim 2, characterized in that the device state detection unit detects at least one state from an open/closed state, a slide state, and a rotation state of a housing of the mobile terminal device.

The present invention according to claim 4 is the invention according to claim 2 or 3, characterized in that the device state detection unit detects a state of expansion and contraction of a whip antenna of the mobile terminal device.

The present invention according to claim 5 is the invention according to any one of claims 2 to 4, characterized in that the accessory connection detection unit detects the presence or absence of a connection of at least one accessory from a pair of headphones, a wireless communication device, and a battery charger.

The present invention according to claim 6 is the invention according to any one of claims 2 to 5, characterized in that the communication state detection unit detects at least one call type from a standby state, voice conversation, video telephone communication, and mail.

The present invention according to claim 7 is the invention according to any one of claims 2 to 6, characterized in that the device includes a memory unit for storing antenna setting information that indicates an antenna one-to-one corresponding to the respective detection results detected by the device state detection unit, the accessory connection detection unit and the communication state detection unit; and the antenna switching unit checks the respective detection results detected by the device state detection unit, the accessory connection detection unit and the communication state detection unit against the antenna setting information stored in the memory unit, selects an antenna corresponding to the respective detection results from the antenna setting information, and switches to the antenna.

The present invention according to claim 8 is an antenna switching method performed in a mobile terminal device including a plurality of antennas, characterized by detecting a plurality of states of the mobile terminal device, and selecting an appropriate antenna from the plurality of antennas and switching to it based on the plurality of detection results.

The present invention according to claim 9 is an antenna switching method performed in a mobile terminal device including a plurality of antennas, characterized in that the method includes: a device state detection step of detecting a device state of the mobile terminal device; an accessory connection detection step of detecting an accessory connected to the mobile terminal device; a communication state detection step of detecting a communication state of the mobile terminal device; and an antenna switching step of selecting an appropriate antenna from the plurality of antennas and switching to it based on respective detection results detected by the device state detection step, the accessory connection detection step and the communication state detection step.

The present invention according to claim 10 is the invention according to claim 9, characterized in that the device state detection step detects at least one state from an open/closed state, a sliding state, and a rotation state of a housing of the mobile terminal device.

The present invention according to claim 11 is the invention according to claim 9 or 10, characterized in that the device state detection step detects a state of expansion and contraction of a whip antenna of the mobile terminal device.

The present invention according to claim 12 is the invention according to any one of claims 9 to 11, characterized in that the accessory connection detection step detects the presence or absence of a connection of at least one accessory from a pair of headphones, a wireless communication device, and a battery charger.

The present invention according to claim 13 is the invention according to any one of claims 9 to 12, characterized in that the communication state detection step detects at least one call type from a standby state, voice conversation, video telephone communication, and mail.

The present invention according to claim 14 is the invention according to any one of claims 9 to 13, characterized in that the method includes a memory step of previously storing antenna setting information that indicates an antenna one to one corresponding to the respective detection results detected at the device state detection step, the accessory connection detection step and the communication state detection step; and the antenna switching step checks the respective detection results detected by the device state detection step, the accessory connection detection step and the communication state detection step against the antenna setting information stored by the memory step, selects an antenna corresponding to the respective detection results from the antenna setting information, and switches to the antenna.

The present invention according to claim 15 is a program causing a mobile terminal device with a plurality of antennas to execute an antenna switching method, characterized by causing the mobile terminal device to execute processes of detecting a plurality of states of the mobile terminal device, and selecting an appropriate antenna from the plurality of antennas and switching to it based on the plurality of detection results.

The present invention according to claim 16 is a program causing a mobile terminal device with a plurality of antennas to execute an antenna switching method, characterized by causing the mobile terminal device to execute: a device state detection process of detecting a device state of the mobile terminal device; an accessory connection detection process of detecting an accessory connected to the mobile terminal device; a communication state detection process of detecting a communication state of the mobile terminal device; and an antenna switching process of selecting an appropriate antenna from the plurality of antennas and switching to it based on respective detection results detected by the device state detection process, the accessory connection detection process and the communication state detection process.

The present invention according to claim 17 is the invention according to claim 16, characterized in that the device state detection process detects at least one state from an open/closed state, a sliding state, and a rotation state of a housing of the mobile terminal device.

The present invention according to claim 18 is the invention according to claim 16 or 17, characterized in that the device state detection process detects a state of expansion and contraction of a whip antenna of the mobile terminal device.

The present invention according to claim 19 is the invention according to any one of claims 16 to 18, characterized in that the accessory connection detection process detects the presence or absence of a connection of at least one accessory from a pair of headphones, a wireless communication device, and a battery charger.

The present invention according to claim 20 is the invention according to any one of claims 16 to 19, characterized in that the communication state detection process detects at least one call type from a standby state, voice conversation, video telephone communication, and mail.

The present invention according to claim 21 is the invention according to any one of claims 16 to 20, characterized in that the program causes the mobile terminal device to execute a memory process of previously storing antenna setting information that indicates an antenna one to one corresponding to the respective detection results detected by the device state detection process, the accessory connection detection process and the communication state detection process; and the antenna switching process checks the respective detection results detected by the device state detection process, the accessory connection detection process and the communication state detection process against the antenna setting information stored by the memory process, selects an antenna corresponding to the respective detection results from the antenna setting information, and switches to the antenna.

### Effects of the invention

According to the present invention, in antenna switching of a mobile phone, diversifying conditions for antenna selection can cope with various use states, and therefore, appropriate antenna switching compared to the conventional technique can be realized.

### Best mode for carrying out the invention

Hereinafter, best modes for carrying out the present invention are described in detail with reference to accompanying drawings.

The present invention is a mobile communication terminal device (mobile terminal device) including at least two or more antennas, characterized in that an antenna for use is selected depending on a state of the device (an open/closed state of a folding type, a state of a sliding type or a rotating type, etc.), the presence or absence of a connection of accessories such as a pair of headphones, and a radio communication state (respective call types of data communication such as a standby state, voice communication, video telephone communication and mail) ; and switching to the most appropriate antenna is performed.

### Exemplary embodiment 1

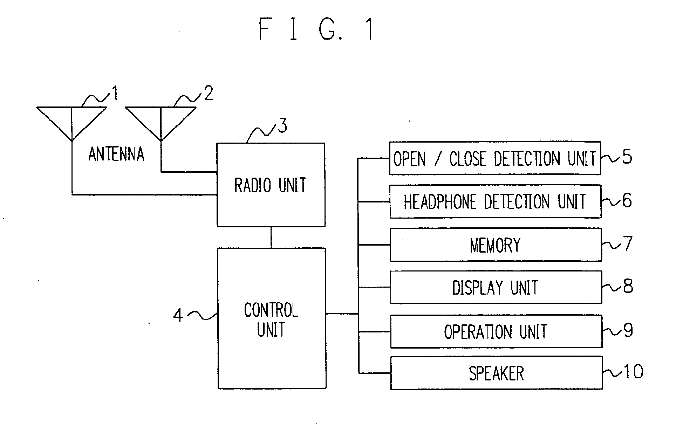

Described is a mobile phone configuration in one exemplary embodiment of a mobile terminal device of the present invention with Figure 1. The mobile phone of the exemplary embodiment is a folding type mobile phone whose upper case and lower case are capable of being opened and closed through a hinge portion.

As shown in Figure 1, the mobile phone of the exemplary embodiment includes antennas 1 and 2 for performing radio communication, a radio unit 3 including a transmitting/receiving circuit, a control unit 4 for controlling operating processes of respective units, an open/close detection unit 5 for detecting an open/closed state of the mobile phone, a headphone detection unit 6 for detecting the presence or absence of a headphone connection, a memory 7 for storing antenna setting information and the like, a display unit 8, an operation unit 9, and a speaker 10. Additionally, the mobile phone of the exemplary embodiment enables communication such as Idle, AMR, UDI/PPP, IP, TV as a radio communication system and also enables communication obtained by combining these.

The antennas 1 and 2 show that the mobile phone of the exemplary embodiment includes a plurality of antennas, and either of which is used when radio communication is performed. The open/close detection unit 5 detects an open/closed state of the mobile phone and sends the detection result as detection information (information indicating that the mobile phone is in an open state or a closed state) to the control unit 4. The headphone detection unit 6 detects the presence or absence of a headphone connection to the mobile phone and sends the detection result as detection information (information indicating whether a headphone connection is present or not) to the control unit 4. The control unit 4 discriminates a radio communication state (each call type) of the mobile phone including a standby state. Also, the control unit 4 checks the respective detection information received from the open/close detection unit 5 and the headphone detection unit 6 and the communication state (call type) discriminated by itself against antenna setting information stored in the memory 7; selects an antenna appropriate for a current use state; and performs control for switching to the selected antenna if another antenna is in use.

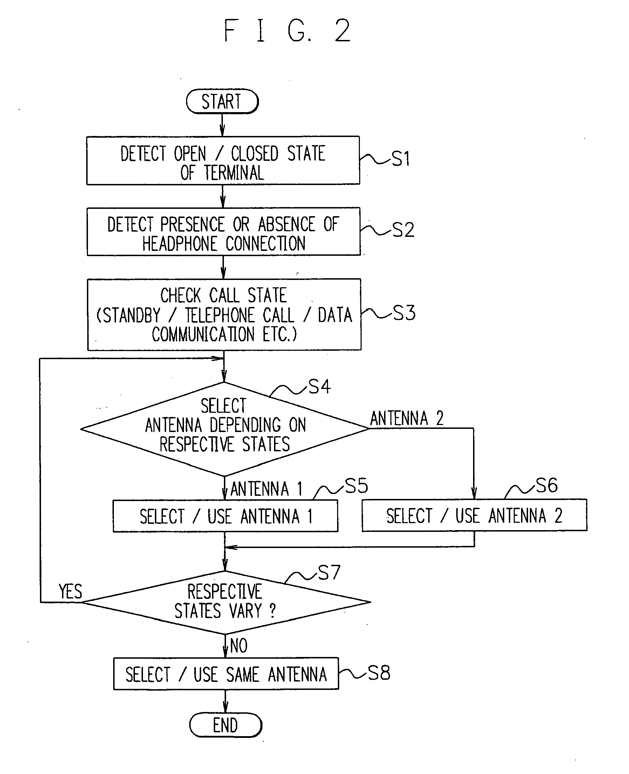

Now, operations of the mobile phone (antenna switching method) of the exemplary embodiment are described with reference to Figures 1, 2, and 3. Note that a program for performing the antenna switching method of the exemplary embodiment is loaded from a predetermined storage area into the mobile phone to control operations of the mobile phone. The mobile phone performs processing operations shown in Figure 2 (steps S1 to S8) by the control of the program.

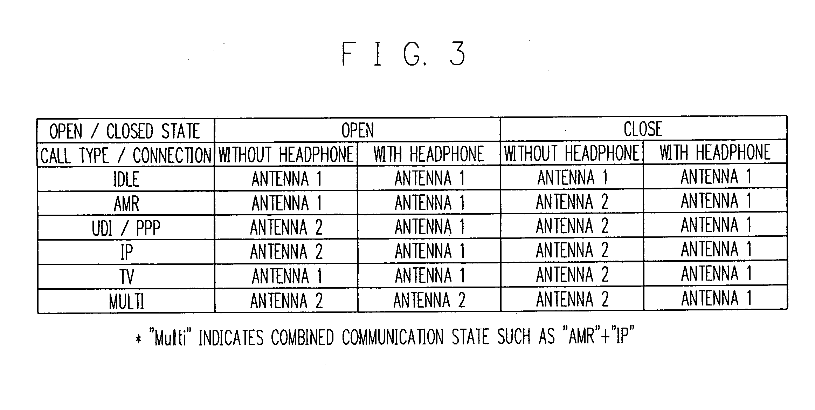

In the mobile phone of the exemplary embodiment, as shown in Figure 2, the open/close detection unit 5 detects an open/closed state of the mobile phone (step S1) and the headphone detection unit 6 detects the presence or absence of a headphone connection to the mobile phone (step S2). Then, the control unit 4 checks a communication state of the mobile phone (step S3); collates the communication state with the respective detection information from the open/close detection unit 5 and the headphone detection unit 6; selects an appropriate antenna for use based on the antenna setting information (see Figure 3) previously stored in the memory 7 and indicating an antenna for use depending on respective states of the mobile phone; and performs antenna switching control (step S4).

Here, the antenna setting information used in step S4 is described with reference to Figure 3. The antenna setting information is reference information for setting an appropriate antenna and for coping with various states of the mobile phone. In the antenna setting information, as shown in Figure 3, conditions for selecting an appropriate antenna are set in which the mobile phone is in an open state or a closed state (open or close), a pair of headphone of the mobile phone is connected or not (with or without a pair of headphones), and what is a communication state (call type) (which communication state among Idle, AMR, UDI/PPP, IP, TV, and Multi. Multi is a communication state obtained by combining two or more communication states, for example, "AMR"+"IP" or the like). Then, the each condition corresponds to an antenna to be set (antenna 1 or antenna 2) with one to one correspondence. For example, in the case where detection information detected by the open/close detection unit 5 indicates "close", detection information detected by the headphone detection unit 6 indicates "with a pair of headphones" and a communication state detected by the control unit 4 is "IP", "ANTENNA 1" fitting these conditions is selected. According to the above description, in the exemplary embodiment, conditions for antenna selection are diversified to cope with various use states in antenna switching of the mobile phone. Thus, it is possible to realize appropriate antenna switching compared to the conventional technique.

Additionally, the antenna setting information is previously stored in the memory when the mobile phone is manufactured, while users may arbitrarily perform addition/deletion of the respective conditions.

The radio unit 3 performs radio communication by using an antenna (antenna 1 or antenna 2) selected by the control unit 4 (steps S5 and S6).

For example, in a communication state using the antenna 1, if state variation of the mobile phone including the communication state is detected by the control unit 4, the open/close detection unit 5 and the headphone detection unit 6 (step S7), the control unit 4 performs a switching and modification process of an antenna for use once again according to the antenna setting information (see Figure 3) stored in the memory 7. If antenna switching is not required according to the respective detection information and the antenna setting information, the radio unit 3 performs radio communication by continuously using the selected antenna in use (step S8).

The exemplary embodiment employs a configuration with two antennas, while a configuration may also be employed in which the number of antennas in the mobile phone is n (n > 2, n is an integer), and one antenna for use is selected and switched to depending on respective states.

According to the above description, the mobile phone of the exemplary embodiment shows following effects.
The first effect is that switching an antenna for use depending on various states of the mobile phone can perform antenna switching efficiently without a complicated control sequence for using.
The second effect is that switching a plurality of antennas efficiently for using can reduce influence on an antenna from a human body and ensure antenna characteristics and quality of the mobile phone.

### Exemplary embodiment 2

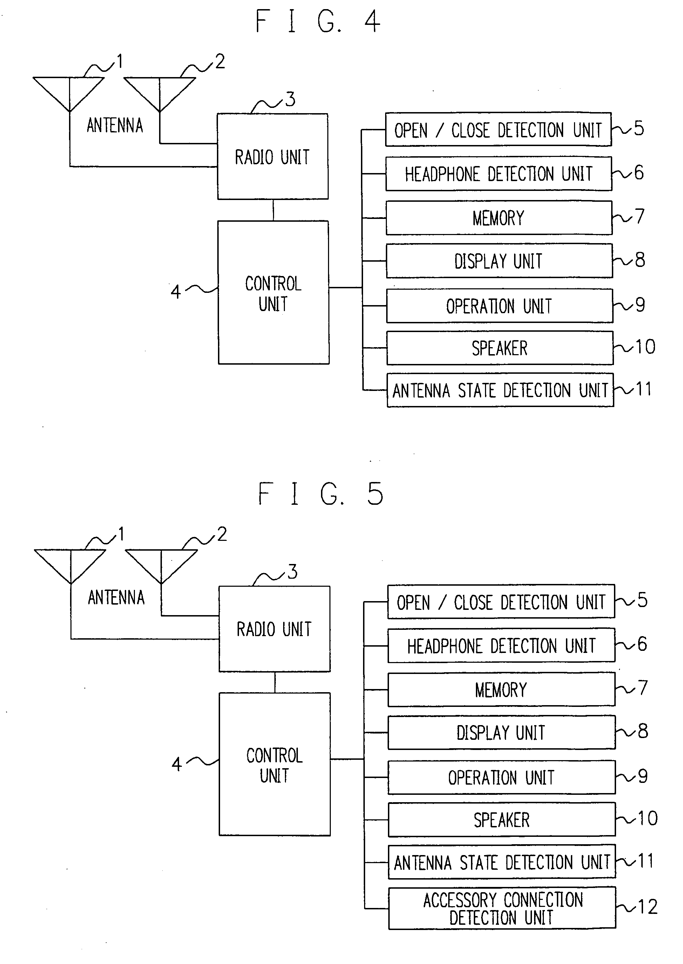

The mobile phone of the exemplary embodiment 2 of the present invention, as shown in Figure 4, includes a basic configuration similar to the configuration of exemplary embodiment 1, and in addition, a mobile phone includes a whip antenna (not shown) capable of expanding and contracting. The mobile phones in the exemplary embodiment includes an antenna state detection unit 11 for detecting expansion and contraction of the whip antenna; an expansion state and a contraction state of the whip antenna are added as a trigger for antenna switching to the conditions for setting an antenna for use in exemplary embodiment 1; and antenna switching is performed. Thus, in addition to the effects of exemplary embodiment 1, the exemplary embodiment can also be applied to a mobile phone with a whip antenna.

### Exemplary embodiment 3

The mobile phone in the exemplary embodiment 3 of the present invention includes a basic configuration similar to the configuration of the mobile phone in either exemplary embodiment 1 or 2; and an open/close detection unit 5 detects device state variation of a sliding mobile phone either of whose upper case or lower case slides, or a rotating mobile phone either of whose upper case or lower case rotates (whether the mobile phone is in a sliding state or not, or in a rotating state or not). Then, the detected device state variation is added as a trigger for antenna switching to the conditions for setting an antenna for use in exemplary embodiment 1, thereby performing antenna switching. Thus, in addition to the effects of exemplary embodiments 1 and 2, the exemplary embodiment can also be applied to a mobile phone other than a folding mobile phone.

### Exemplary embodiment 4

Exemplary embodiment 4 of the present invention, as shown in Figure 5, is the mobile phone in any one of exemplary embodiments 1 to 3, wherein it includes an accessory connection detection unit 12 for detecting the presence or absence of connections of accessories that enable users to connect arbitrarily to the mobile phone (a wireless communication device with Blue Tooth or a battery charger) other than a pair of headphones; the presence or absence of these connections is added as a trigger to the conditions for setting an antenna for use in exemplary embodiment 1, thereby performing an antenna switching. In Figure 5, a headphone detection unit 5 and the accessory connection detection unit 12 are provided separately, however, a configuration in which the accessory connection detection unit 12 includes functions of the headphone detection unit 5 may be employed. Thus, in addition to effects of any one of exemplary embodiments 1 to 3, the exemplary embodiment can also be applied to a mobile phone capable of connecting an accessory other than a pair of headphones.

While exemplary embodiments 1 to 4 of the present invention have been described, the present invention is not limited to the description of the respective exemplary embodiments, but various changes and modifications can be made without departing from the scope of the present invention.

### Industrial Applicability

The present invention can be applied to whole communication equipment field including mobile terminal devices other than mobile phones.

### Brief Description of the Drawings

Figure 1 is a block diagram showing a basic configuration of a mobile phone in exemplary embodiment 1 of the present invention;
Figure 2 is a flow chart showing operations of the mobile phone in exemplary embodiment 1 of the present invention;
Figure 3 is a chart showing the correspondence between a state of the mobile phone in exemplary embodiment 1 of the present invention and an antenna for use;
Figure 4 is a block diagram showing a basic configuration of a mobile phone in exemplary embodiment 2 of the present invention; and
Figure 5 is a block diagram showing a basic configuration of a mobile phone in exemplary embodiment 4 of the present invention.

### Description of Symbols

- 1: antenna
- 2: antenna
- 3: radio unit
- 4: control unit (one example of communication state detection means, one example of antenna switching means)
- 5: open/close detection unit (one example of device state detection means)
- 6: headphone detection unit (one example of accessory connection detection means)
- 7: memory (one example of memory means)
- 8: display unit
- 9: operation unit
- 10: speaker
- 11: antenna state detection unit (one example of device state detection means)
- 12: accessory connection detection unit (one example of accessory connection detection means)

## Claims

1. A mobile terminal device including a plurality of antennas and performing antenna switching,
**characterized by** detecting a plurality of states of the mobile terminal device and selecting an appropriate antenna from the plurality of antennas and switching to it based on the plurality of detection results.

2. A mobile terminal device including a plurality of antennas and performing antenna switching,
**characterized in that** the device includes:
device state detection means for detecting a device state of the mobile terminal device;
accessory connection detection means for detecting an accessory connected to the mobile terminal device;
communication state detection means for detecting a communication state of the mobile terminal device; and
antenna switching means for selecting an appropriate antenna from the plurality of antennas and switching to it based on respective detection results detected by the device state detection means, the accessory connection detection means and the communication state detection means.

3. The mobile terminal device according to claim 2, **characterized in that** the device state detection means detects at least one state from an open/closed state, a sliding state, and a rotation state of a housing of the mobile terminal device.

4. The mobile terminal device according to claim 2 or 3, **characterized in that** the device state detection means detects a state of expansion and contraction of a whip antenna of the mobile terminal device.

5. The mobile terminal device according to any one of claims 2 to 4, **characterized in that** the accessory connection detection means detects the presence or absence of a connection of at least one accessory from a pair of headphones, a wireless communication device, and a battery charger.

6. The mobile terminal device according to any one of claims 2 to 5, **characterized in that** the communication state detection means detects at least one call type from a standby state, voice conversation, video telephone communication, and mail.

7. The mobile terminal device according to any one of claims 2 to 6, **characterized in that** the device includes memory means for storing antenna setting information that indicates an antenna one-to-one corresponding to the respective detection results detected by the device state detection means, the accessory connection detection means and the communication state detection means; and
the antenna switching means checks the respective detection results detected by the device state detection means, the accessory connection detection means and the communication state detection means against the antenna setting information stored in the memory means, selects an antenna corresponding to the respective detection results from the antenna setting information, and switches to the antenna.

8. An antenna switching method performed in a mobile terminal device including a plurality of antennas,
**characterized by** detecting a plurality of states of the mobile terminal device, and selecting an appropriate antenna from the plurality of antennas and switching to it based on the plurality of detection results.

9. An antenna switching method performed in a mobile terminal device including a plurality of antennas,
**characterized in that** the method includes:
a device state detection step of detecting a device state of the mobile terminal device;
an accessory connection detection step of detecting an accessory connected to the mobile terminal device;
a communication state detection step of detecting a communication state of the mobile terminal device; and
an antenna switching step of selecting an appropriate antenna from the plurality of antennas and switching to it based on respective detection results detected at the device state detection step, the accessory connection detection step and the communication state detection step.

10. The antenna switching method according to claim 9, **characterized in that** the device state detection step detects at least one state from an open/closed state, a sliding state, and a rotation state of a housing of the mobile terminal device.

11. The antenna switching method according to claim 9 or 10, **characterized in that** the device state detection step detects a state of expansion and contraction of a whip antenna of the mobile terminal device.

12. The antenna switching method according to any one of claims 9 to 11, **characterized in that** the accessory connection detection step detects the presence or absence of a connection of at least one accessory from a pair of headphones, a wireless communication device, and a battery charger.

13. The antenna switching method according to any one of claims 9 to 12, **characterized in that** the communication state detection step detects at least one call type from a standby state, voice conversation, video telephone communication, and mail.

14. The antenna switching method according to any one of claims 9 to 13, **characterized in that** the method includes a memory step of previously storing antenna setting information that indicates an antenna one to one corresponding to the respective detection results detected at the device state detection step, the accessory connection detection step and the communication state detection step; and
the antenna switching step checks the respective detection results detected at the device state detection step, the accessory connection detection step and the communication state detection step against the antenna setting information stored by the memory step, selects an antenna corresponding to the respective detection results from the antenna setting information, and switches to the antenna.

15. A program causing a mobile terminal device with a plurality of antennas to execute an antenna switching method,
**characterized by** causing the mobile terminal device to execute processes of detecting a plurality of states of the mobile terminal device, and selecting an appropriate antenna from the plurality of antennas and switching to it based on the plurality of detection results.

16. A program causing a mobile terminal device with a plurality of antennas to execute an antenna switching method,
**characterized by** causing the mobile terminal device to execute:
a device state detection process of detecting a device state of the mobile terminal device;
an accessory connection detection process of detecting an accessory connected to the mobile terminal device;
a communication state detection process of detecting a communication state of the mobile terminal device; and
an antenna switching process of selecting an appropriate antenna from the plurality of antennas and switching to it based on respective detection results detected by the device state detection process, the accessory connection detection process and the communication state detection process.

17. The program according to claim 16, **characterized in that** the device state detection process detects at least one state from an open/closed state, a sliding state, and a rotation state of a housing of the mobile terminal device.

18. The program according to claim 16 or 17, **characterized in that** the device state detection process detects a state of expansion and contraction of a whip antenna of the mobile terminal device.

19. The program according to any one of claims 16 to 18, **characterized in that** the accessory connection detection process detects the presence or absence of a connection of at least one accessory from a pair of headphones, a wireless communication device, and a battery charger.

20. The program according to any one of claims 16 to 19, **characterized in that** the communication state detection process detects at least one call type from a standby state, voice conversation, video telephone communication, and mail.

21. The program according to any one of claims 16 to 20, **characterized in that** the program causes the mobile terminal device to execute a memory process of previously storing antenna setting information that indicates an antenna one to one corresponding to the respective detection results detected by the device state detection process, the accessory connection detection process and the communication state detection process; and
the antenna switching process checks the respective detection results detected by the device state detection process, the accessory connection detection process and the communication state detection process against the antenna setting information stored by the memory process, selects an antenna corresponding to the respective detection results from the antenna setting information, and switches to the antenna.
